# EUROPÄISCHE PATENTSCHRIFT

(11) **EP 1 987 919 B1**
(45) Veröffentlichungstag und Bekanntmachung des Hinweises auf die Patenterteilung: **14.06.2017**
(21) Anmeldenummer: 08007256.4
(22) Anmeldetag: 12.04.2008
(51) Int. Cl.: B24B 53/085, B24B 53/12, B23F 23/12, B23F 5/04

(54) **VERFAHREN UND SCHLEIFMASCHINE ZUM PROFILIEREN EINES SCHLEIFWERKZEUGS**
METHOD AND GRINDING MACHINE FOR PROFILING A GRINDING TOOL
PROCÉDÉ ET MEULEUSE DESTINÉS À PROFILER UN OUTIL DE RECTIFICATION

(30) Priorität: 27.04.2007 DE 102007020479
(43) Veröffentlichungstag der Anmeldung: 05.11.2008
(73) Patentinhaber: Kapp GmbH, 96450 Coburg (DE)
(72) Erfinder: Lopez, Jose, 96484 Meeder (DE)
(74) Vertreter: Gosdin, Michael

(56) Entgegenhaltungen:
- WO-A1-98/02268
- WO-A1-2006/082470
- DE-A1- 19 624 842
- DE-A1- 19 706 867
- DE-A1- 19 907 363

## Beschreibung

Die Erfindung betrifft ein Verfahren zum Profilieren eines Schleifwerkzeugs, das im Axialschnitt mindestens ein zahnförmiges Profil aufweist, wobei das zahnförmige Profil eine erste Flanke und eine zweite, der ersten Flanke gegenüber liegende Flanke aufweist, die die Berandung des zahnförmigen Profils bilden, wobei beim Profilieren des Schleifwerkzeugs ein scheibenförmiges Abrichtwerkzeug mit einer ersten Abrasivfläche und einer zweiten Abrasivfläche bei Vorliegen einer Relativgeschwindigkeit zwischen den Abrasivflächen und dem zahnförmigen Profil relativ zu dem Schleifwerkzeug geführt wird, so dass sich eine gewünschte Form der Flanken ergibt, wobei die erste Abrasivfläche der ersten Flanke und die zweite Abrasivfläche der zweiten Flanke zugeordnet ist. Des Weiteren betrifft die Erfindung eine Schleifmaschine zum Durchführen des Verfahrens.

Ein gattungsgemäßes Verfahren sowie eine entsprechende Schleifmaschine sind aus der WO 98/02268 A1 bekannt. Ähnliche und andere Lösungen zeigen die DE 197 06 867 A1**,** die DE 196 24 842 A1**,** die WO 2006/082470 A1 und die DE 199 07 363 A1**.**

Bei der Herstellung von Zahnrädern kommt dem abschließenden Bearbeitungsprozess eine wichtige Bedeutung zu. Bei diesem werden die Zahnflanken einer Schleifoperation unterzogen, mit der sie auf die genaue Kontur gebracht werden. Dabei sind oft über die Verzahnungsevolvente hinausgehende Korrekturen erwünscht, um das Betriebsverhalten der Verzahnung positiv zu beeinflussen.

Eine effiziente Verfahrensweise bei der Herstellung der Verzahnung ist das Wälzschleifen mit einer Schleifschnecke. Dabei steht das zu bearbeitende Zahnrad mit der Schleifschnecke im Eingriff, so dass durch das Abrasivmaterial der Schleifschnecke ein Aufmaß auf den Zahnflanken abgetragen werden kann.

Um eine hinreichende Qualität der Verzahnung zu erreichen, müssen die Arbeitsflächen der Schleifschnecke (d. h. das zahnförmige Profil der Schleifschnecke) nach einer gewissen Anzahl geschliffener Werkstücke erneut auf die gewünschte Form gebracht werden. Hierfür ist ein Abrichtvorgang erforderlich, für den ein Profilabrichtverfahren oder ein zeilenweises Abrichtverfahren eingesetzt werden kann. Beim Profilabrichten hat das Abrichtwerkzeug mit den Flanken des zahnförmigen Profils des Schleifwerkzeugs Linienkontakt, während beim zeilenweisen Abrichten ein punktförmiger Kontakt vorliegt.

Zwar erfordert das zeilenförmige Abrichten eine längere Abrichtzeit, als es beim Profilabrichten der Fall ist. Der Vorteil des zeilenweisen Abrichtens ist allerdings, dass ohne großen Aufwand Profilmodifikationen realisiert werden können.

Bekannt ist es, mit einer geeigneten Abrichtscheibe, die insbesondere einen im Axialschnitt kreis- oder bogenförmigen Abschnitt aufweist, der mit Hartstoff besetzt ist, zeilenweise die Kontur der Flanke des zahnförmigen Profils abzufahren. Dies muss zunächst für die eine Flanke und dann für die gegenüberliegende andere Flanke erfolgen.

Nachteilig ist, dass hierfür eine entsprechende Zeit benötigt wird, so dass der Schleifvorgang entsprechend teuer ist.

Der Erfindung liegt die **Aufgabe** zugrunde, ein Verfahren der eingangs genannten Art so fortzubilden, dass es möglich wird, in kürzerer Zeit mit derselben Qualität das Abrichten des Schleifwerkzeugs zu bewerkstelligen. Dabei soll das Prinzip des zeilenweisen Abrichtens beibehalten werden, um bezüglich Profilmodifikationen flexibel zu sein. Ferner soll eine entsprechende Schleifmaschine vorgeschlagen werden.

Die **Lösung** dieser Aufgabe durch die Erfindung ist verfahrensgemäß dadurch gekennzeichnet, dass zumindest über einen Teil der Höhe des zahnförmigen Profils - vorzugsweise über die gesamte Höhe des Profils - das scheibenförmige, um eine Drehachse rotierende Abrichtwerkzeug so geführt wird, dass simultan die erste Abrasivfläche die erste Flanke und die zweite Abrasivfläche die zweite Flanke kontaktiert, wozu das scheibenförmige Abrichtwerkzeug und/oder das Schleifwerkzeug relativ zueinander um eine auf der Drehachse des Schleifwerkzeugs senkrecht stehende Achse geschwenkt wird, wobei die Achse in einer Ebene liegt, die durch die Drehachse des scheibenförmigen Abrichtwerkzeugs und die Drehachse des Schleifwerkzeugs im noch nicht verschwenkten Zustand zwischen den Drehachsen aufgespannt wird, so dass gleichzeitig beide Flanken abgerichtet werden.

Die erfindungsgemäße Idee stellt also darauf ab, dass das Abrichtwerkzeug - sich in der "Zahnlücke" befindend - so um eine Querachse verdreht wird, dass gleichzeitig Abrichtkontakt an der vorderen und hinteren Seite des Abrichtrades vorliegt. Damit können gleichzeitig beide Flanken des zahnförmigen Profils profiliert werden, was erheblich Abrichtzeit einspart.

Das scheibenförmige Abrichtwerkzeug wird dabei gemäß einer Ausgestaltung der Erfindung relativ zum Schleifwerkzeug (Schleifschnecke) geschwenkt, das sich zwar dreht, jedoch nicht geschwenkt wird. Genauso kann alternativ aber auch vorgesehen werden, dass die Schleifschnecke relativ zum Abrichtwerkzeug schwenkt.

Das Schleifwerkzeug ist bevorzugt eine ein- oder mehrgängige Schleifschnecke für das Schleifen eines Zahnrades im Wälzschleifverfahren.

Beim Abrichten liegt zwischen den Flanken des Schleifwerkzeugs und den Abrasivflächen des Abrichtwerkzeugs bevorzugt eine im Wesentlichen punktförmige Berührung vor. Dabei kann vorgesehen sein, dass das Abrichten durch Ausführung einer Anzahl Abrichthübe erfolgt, bei denen das Abrichtwerkzeug relativ zum Schleifwerkzeug in axiale Richtung bei jeweils konstanter radialer Zustellung verfahren wird.

Das vorgeschlagene Verfahren ist besonders wirtschaftlich, wenn es an einer bereits vorprofilierten Schleifschnecke durchgeführt wird, um Profilmodifikationen auf die Flanken der Schleifschnecke aufzubringen.

Auch der Fuß- und/oder Kopfbereich des zahnförmigen Profils wird bevorzugt mit Verschwenkung des Abrichtwerkzeugs um die senkrecht auf der Drehachse des Schleifwerkzeugs stehenden Achse durchgeführt.

Alternativ ist es auch möglich, dass der Kopfbereich des zahnförmigen Profils mittels eines Abrichtlineals abgerichtet wird.

Der Kopfbereich der Schleifschnecke kann also mit dem topologischen Abrichtwerkzeug oder mit einem Abrichtlineal bearbeitet werden. Wird der Zahnfuß der zu schleifenden Verzahnung nicht bearbeitet, kann die Schleifschnecke am Außendurchmesser gerade abgerichtet werden. Dabei wird bevorzugt die gesamte Schleifschneckenbreite gleichzeitig mit einem Abrichtwerkzeug in Form eines Abrichtlineals abgerichtet. Dies nimmt nur einen Bruchteil der Zeit in Anspruch, die ein topologisches Abrichtwerkzeug benötigen würde.

Beim Abrichten des Fuß- und/oder Kopfbereichs der Schleifschnecke wird die Schleifschnecke oder das Abrichtwerkzeug also gemäß einer möglichen Lösung um die Drehachse in der erläuterten Weise geschwenkt. Das Abrichten des Kopfbereichs kann indes einflankig erfolgen.

Die vorgeschlagene Schleifmaschine zum Durchführen des Verfahrens hat ein als Schleifschnecke ausgebildetes Schleifwerkzeug, das auf einer sich um eine Drehachse drehenden Schleifspindel angeordnet ist, sowie ein scheibenförmiges Abrichtwerkzeug, das auf einer sich um eine Drehachse drehenden Abrichtspindel angeordnet ist, wobei Linearführungen angeordnet sind, um das Abrichtwerkzeug relativ zu der Schleifschnecke in Achsrichtung zu verfahren und in radiale Richtung zuzustellen. Erfindungsgemäß ist vorgesehen, dass elektromotorisch angetriebene Schwenkmittel vorhanden sind, um das Abrichtwerkzeug und/oder die Schleifschnecke um eine zur Drehachse der Schleifschnecke senkrecht stehende Achse zu verschwenken, wobei die Achse in einer Ebene liegt, die durch die Drehachse des scheibenförmigen Abrichtwerkzeugs und die Drehachse des Schleifwerkzeugs im noch nicht verschwenkten Zustand zwischen den Drehachsen aufgespannt wird und wobei der Schwenkwinkel durch eine Maschinensteuerung zumindest in Abhängigkeit des momentanen Achsabstands (in X-Richtung) des Abrichtwerkzeugs relativ zur Schleifschnecke eingestellt wird.

Mit der vorgeschlagenen Vorgehensweise wird es möglich, den Abrichtvorgang in wesentlich kürzerer Zeit mit derselben Qualität durchzuführen, da zumindest über einen Teil der Höhe des zahnförmigen Profils des Werkzeugs (Schleifschnecke) die beiden sich gegenüber liegenden Flanken des zahnförmigen Profils gleichzeitig abgerichtet werden. Dies war bislang nicht möglich.

Damit kann in der Spitze die Abrichtzeit um die Hälfte reduziert werden. Die Wirtschaftlichkeit des Verfahrens wird dadurch wesentlich erhöht.

Die Erfindung wird bevorzugt für das Abrichten von Schleifschnecken zum Wälzschleifen von Verzahnungen eingesetzt.

In der Zeichnung ist ein Ausführungsbeispiel der Erfindung dargestellt. Es zeigen:
- Fig. 1: einen Axialschnitt durch eine Schleifschnecke während des Abrichtens mit einem Abrichtwerkzeug gemäß dem Stand der Technik und
- Fig. 2: eine zu Fig. 1 korrespondierende Darstellung beim Abrichten gemäß der Erfindung.

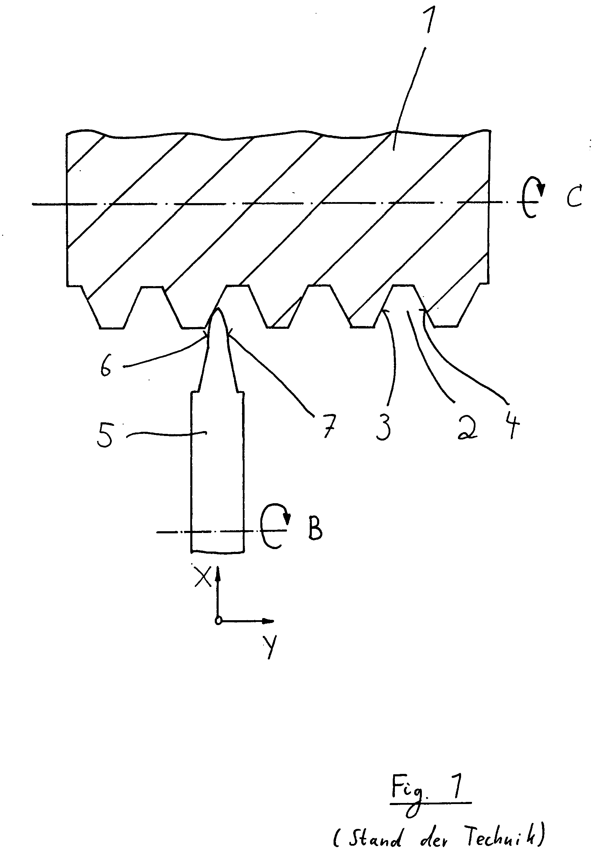

In Fig. 1 ist das an sich vorbekannte zeilenweise Abrichten eines Schleifwerkzeugs 1 in Form einer Schleifschnecke zu sehen. Die Schleifschnecke 1 hat im Axialschnitt ein zahnförmiges Profil 2, das von zwei Flanken 3 und 4 definiert bzw. begrenzt wird. Die erste Flanke 3 und genauso die zweite Flanke 4 haben im Axialschnitt eine weitgehend lineare Form, allerdings sind dem weitgehend linearen Verlauf Korrekturen überlagert, um beim fertig geschliffenen Zahnrad ein entsprechendes Gegenprofil zu erhalten. Die beiden Flanken 3 und 4 liegen sich - wie ersichtlich - gegenüber.

Damit das zahnförmige Profil 2 die gewünschte präzise Form aufweist, ist ein Abrichtvorgang erforderlich, für den ein scheibenförmiges Abrichtwerkzeug 5 vorgesehen ist. Das Abrichtwerkzeug 5 hat im Axialschnitt die in Fig. 1 skizzierte Form, d. h. eine erste Abrasivfläche 6 und eine zweite Abrasivfläche 7, die zum Zusammenwirken mit der ersten Flanke 3 bzw. mit der zweiten Flanke 4 vorgesehen sind.

Beim Abrichten rotiert die Schleifschnecke 1 um die Drehachse C und das rotationssymmetrische Abrichtwerkzeug 5 um die Drehachse B. Bei vorliegender Rotation um die Drehachsen B, C wird dann der mit den Abrasivflächen 6, 7 versehene Arbeitsbereich des Abrichtwerkzeugs 5 in den Schneckengang der Schleifschnecke 1 "eingefädelt", d. h. in Abhängigkeit der Schneckensteigung und der Drehzahl der Schleifschnecke 1 wird das Abrichtwerkzeug 5 in Achsrichtung Y vorgeschoben. Dabei wird zeilenweise zunächst die erste Flanke 3 und dann die zweite Flanke 4 profiliert. D. h. dass nach jeweiligen axialen Durchläufen das Abrichtwerkzeug 5 relativ zur Schleifschnecke 1 radial in Richtung der Zustellkoordinate X zugestellt wird, bis das zahnförmige Profil 2 über die gesamte Höhe abgerichtet ist.

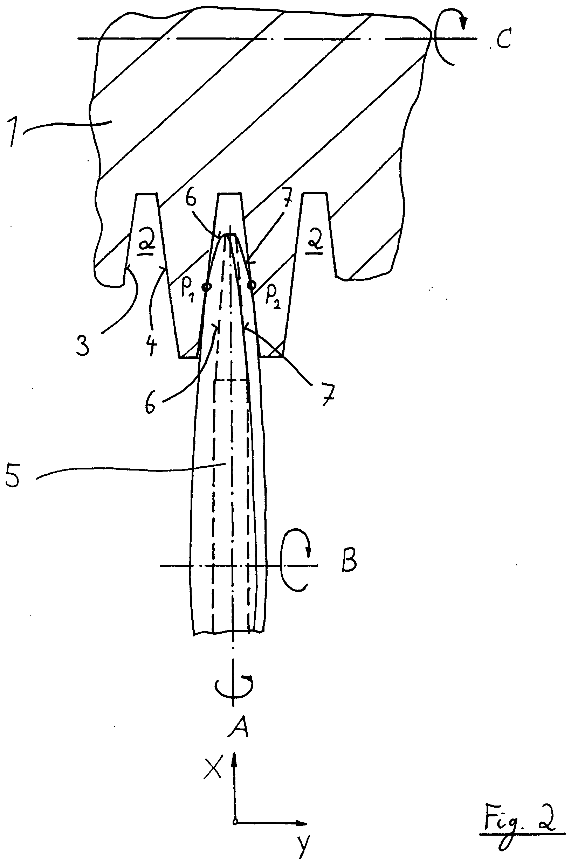

Bei der erfindungsgemäßen Lösung - s. hierzu Fig. 2 - wird demgegenüber anders vorgegangen. Erhalten bleibt das Prinzip, dass zeilenweise abgerichtet wird, d. h. dass nach jeweiligen axialen Durchläufen in Richtung Y eine Zustellung in radiale Richtung X erfolgt.

Jetzt allerdings ist eine weitere Drehachse vorgesehen, um die das Abrichtwerkzeug 5 relativ zur Schleifschnecke 1 geschwenkt wird (oder die Schleifschnecke 1 relativ zum Abrichtwerkzeug 5), nämlich die Achse A. Es handelt sich hierbei um eine Drehachse, die - solange noch keine Verschwenkung zwischen der Schleifschnecke 1 und dem Abrichtwerkzeug 5 vorliegt - bevorzugt in der Ebene liegt, die durch die Drehachse C der Schleifschnecke 1 und die Drehachse B des Abrichtwerkzeugs 5 im noch nicht verschwenkten Zustand aufgespannt wird, und senkrecht auf der Drehachse C bzw. der hierzu parallelen Drehachse B steht.

Konkret ist die Achse A ist die Drehachse um die kürzeste Verbindung (Achsabstand) zwischen der Drehachse C der Schleifschnecke 1 und der Drehachse B des Abrichtwerkzeugs 5.

In Fig. 2 ist mit gestrichelten Linien der Axialschnitt des Abrichtwerkzeugs 5 skizziert, wenn die Drehachsen C und B parallel zueinander liegen, d. h. wenn noch keine Verschwenkung vorliegt. Dann weist das Abrichtwerkzeug die gestrichelt eingetragenen Abrasivflächen 6 und 7 auf, die für das zeilenweise Abrichten benötigt werden.

Die Schwenkung um die Drehachse A erfolgt nunmehr für eine definierte radiale Zustellung X in der Weise, dass die erste Abrasivfläche 6 in Kontakt mit der ersten Flanke 3 gerät und gleichzeitig die zweite Abrasivfläche 7 in Kontakt mit der zweiten Flanke 4 gerät. Wie in Fig. 2 zu sehen ist, liegt damit ein erster Kontaktpunkt P₁ zwischen erster Abrasivfläche 6 und erster Flanke 3 und gleichzeitig ein zweiter Kontaktpunkt P₂ zwischen zweiter Abrasivfläche 7 und zweiter Flanke 4 vor. Das scheibenförmige Abrichtwerkzeug 5 erscheint aufgrund des Schwenkwinkels, wie in Fig. 2 zu erkennen ist, ellipsenförmig.

Für jede radiale Position X ist also ein anderer Schwenkwinkel um die Drehachse A erforderlich, um diesen Zustand herzustellen. Dies wird durch eine nicht dargestellte Maschinensteuerung veranlasst, in der das zu erzeugende Profil gespeichert ist.

Der Vorteil ist, dass pro axialem Durchlauf in Richtung Y eine Höhe der beiden Flanken 3 und 4 abgerichtet wird, d. h. nach einem einmaligen Durchlauf ist das zahnförmige Profil 2 an beiden Flanken 3, 4 abgerichtet. Damit kann etwa die Hälfte der Abrichtzeit eingespart werden, was den Abrichtprozess sehr viel wirtschaftlicher macht.

Bei dem optionalen Abrichten des Kopfbereichs des zahnförmigen Profils 2 mittels eines Abrichtlineals wird eine mit einer geraden Abrichtkante ausgestattete Schiene bzw. ein Lineal durch Eintauchen des Lineals senkrecht zur Achse des Schleifwerkzeugs 1 in einem Prozessschritt im Kopfbereich komplett abgerichtet, wobei das Lineal parallel zur Achse C bleibt. Hierfür beträgt die Länge des Lineals bevorzugt mindestens die Breite des Schleifwerkzeugs 1.

### Bezugszeichenliste:

- 1: Schleifwerkzeug (Schleifschnecke)
- 2: zahnförmiges Profil
- 3: erste Flanke des zahnförmigen Profils
- 4: zweite Flanke des zahnförmigen Profils
- 5: scheibenförmiges Abrichtwerkzeug
- 6: erste Abrasivfläche des Abrichtwerkzeugs
- 7: zweite Abrasivfläche des Abrichtwerkzeugs

- X: radiale Zustellkoordinate (Höhenrichtung des Profils)
- Y: axiale Zustellkoordinate
- A: Schwenkachse des Abrichtwerkzeugs
- B: Drehachse des Abrichtwerkzeugs
- C: Drehachse des Schleifwerkzeugs
- P₁: erster Kontaktpunkt
- P₂: zweiter Kontaktpunkt

## Patentansprüche

1. Verfahren zum Profilieren eines Schleifwerkzeugs (1), das im Axialschnitt mindestens ein zahnförmiges Profil (2) aufweist, wobei das zahnförmige Profil (2) eine erste Flanke (3) und eine zweite, der ersten Flanke (3) gegenüber liegende Flanke (4) aufweist, die die Berandung des zahnförmigen Profils (2) bilden, wobei beim Profilieren des Schleifwerkzeugs (2) ein scheibenförmiges Abrichtwerkzeug (5) mit einer ersten Abrasivfläche (6) und einer zweiten Abrasivfläche (7) bei Vorliegen einer Relativgeschwindigkeit zwischen den Abrasivflächen (6, 7) und dem zahnförmigen Profil (2) relativ zu dem Schleifwerkzeug (1) geführt wird, so dass sich eine gewünschte Form der Flanken (3, 4) ergibt, wobei die erste Abrasivfläche (6) der ersten Flanke (3) und die zweite Abrasivfläche (7) der zweiten Flanke (4) zugeordnet ist,
**dadurch gekennzeichnet,**
**dass** zumindest über einen Teil der Höhe (X) des zahnförmigen Profils (2) das scheibenförmige, um eine Drehachse (B) rotierende Abrichtwerkzeug (5) so geführt wird, dass simultan die erste Abrasivfläche (6) die erste Flanke (3) und die zweite Abrasivfläche (7) die zweite Flanke (4) kontaktiert, wozu das scheibenförmige Abrichtwerkzeug (5) und/oder das Schleifwerkzeug (1) relativ zueinander um eine auf der Drehachse (C) des Schleifwerkzeugs (1) senkrecht stehende Achse (A) geschwenkt wird, wobei die Achse (A) in einer Ebene liegt, die durch die Drehachse (B) des scheibenförmigen Abrichtwerkzeugs (5) und die Drehachse (C) des Schleifwerkzeugs (1) im noch nicht verschwenkten Zustand zwischen den Drehachsen (B, C) aufgespannt wird, so dass gleichzeitig beide Flanken (3, 4) abgerichtet werden.

2. Verfahren nach Anspruch 1, **dadurch gekennzeichnet, dass** das scheibenförmige Abrichtwerkzeug (5) relativ zum Schleifwerkzeug (1) geschwenkt wird.

3. Verfahren nach Anspruch 1, **dadurch gekennzeichnet, dass** das Schleifwerkzeug (1) relativ zum scheibenförmigen Abrichtwerkzeug (5) geschwenkt wird.

4. Verfahren nach einem der Ansprüche 1 bis 3, **dadurch gekennzeichnet, dass** das Schleifwerkzeug (1) eine ein- oder mehrgängige Schleifschnecke für das Schleifen eines Zahnrades im Wälzschleifverfahren ist.

5. Verfahren nach einem der Ansprüche 1 bis 4, **dadurch gekennzeichnet, dass** beim Abrichten zwischen den Flanken (3, 4) des Schleifwerkzeugs (1) und den Abrasivflächen (6, 7) des Abrichtwerkzeugs (5) eine im wesentlichen punktförmige Berührung vorliegt.

6. Verfahren nach Anspruch 5, **dadurch gekennzeichnet, dass** das Abrichten durch Ausführung einer Anzahl Abrichthübe erfolgt, bei denen das Abrichtwerkzeug (5) relativ zum Schleifwerkzeug (1) in axiale Richtung (Y) bei jeweils konstanter radialer Zustellung (X) verfahren wird.

7. Verfahren nach einem der Ansprüche 1 bis 6, **dadurch gekennzeichnet, dass** es an einer bereits vorprofilierten Schleifschnecke durchgeführt wird, um Profilmodifikationen auf die Flanken (3, 4) der Schleifschnecke (1) aufzubringen.

8. Verfahren nach einem der Ansprüche 1 bis 7, **dadurch gekennzeichnet, dass** auch der Fuß- und/oder Kopfbereich des zahnförmigen Profils (2) mit Verschwenkung des Abrichtwerkzeugs (5) um die senkrecht auf der Drehachse (C) des Schleifwerkzeugs (1) stehenden Achse (A) erfolgt.

9. Verfahren nach einem der Ansprüche 1 bis 7, **dadurch gekennzeichnet, dass** der Kopfbereich des zahnförmigen Profils (2) mittels eines Abrichtlineals abgerichtet wird.

10. Schleifmaschine zum Durchführen des Verfahrens nach einem der Ansprüche 1 bis 9, die ein als Schleifschnecke ausgebildetes Schleifwerkzeug (1) aufweist, das auf einer sich um eine Drehachse (C) drehenden Schleifspindel angeordnet ist, die ein scheibenförmiges Abrichtwerkzeug (5) aufweist, das auf einer sich um eine Drehachse (B) drehenden Abrichtspindel angeordnet ist, wobei Linearführungen angeordnet sind, um das Abrichtwerkzeug (5) relativ zu der Schleifschnecke (1) in Achsrichtung (Y) zu verfahren und in radiale Richtung (X) auf Achsabstand zuzustellen,
**dadurch gekennzeichnet,**
**dass** elektromotorisch angetriebene Schwenkmittel vorhanden sind, um das Abrichtwerkzeug (5) und/oder die Schleifschnecke (1) um eine zur Drehachse (C) der Schleifschnecke (1) senkrecht stehende Achse (A) zu verschwenken, wobei die Achse (A) in einer Ebene liegt, die durch die Drehachse (B) des scheibenförmigen Abrichtwerkzeugs (5) und die Drehachse (C) des Schleifwerkzeugs (1) im noch nicht verschwenkten Zustand zwischen den Drehachsen (B, C) aufgespannt wird und wobei der Schwenkwinkel durch eine Maschinensteuerung (8) zumindest in Abhängigkeit der radialen Zustellung (X) des Abrichtwerkzeugs (5) relativ zur Schleifschnecke (1) eingestellt wird.

## Claims

1. Method for the dressing of a grinding tool (1), which has at least one tooth-shaped profile (2) in an axial section, wherein the tooth-shaped profile (2) has a first flank (3) and a second flank (4) being arranged opposed to the first flank (3), which form the boundary of the tooth-shaped profile (2), wherein a disk-shaped dressing tool (5) is used for dressing of the grinding tool (2), the disk-shaped dressing tool (5) having a first abrasive area (6) and a second abrasive area (7), wherein the dressing tool (5), having a relative velocity between the abrasive areas (6, 7) and the tooth-shaped profile (2), is guided relatively to the grinding tool (1), so that a desired shape of the flanks (3, 4) is obtained, wherein the first abrasive area (6) is assigned to the first flank (3) and the second abrasive area (7) is assigned to the second flank (4),
**characterizing in that**
at least along a part of the height (X) of the tooth-shaped profile (2) the disc-shaped dressing tool (5) which rotates around an axis of rotation (B) is guided in such a way that the first abrasive area (6) contacts the first flank (3) and the second abrasive area (7) contacts the second flank (4) simultaneously, whereto the disc-shaped dressing tool (5) and/or the grinding tool (1) are pivoted relatively to another around an axis (A) being arranged perpendicular to the axis of rotation (C) of the grinding tool (1), wherein the axis (A) lies in a plane which is spanned by the axis of rotation (B) of the disc-shaped dressing tool (5) and the axis of rotation (C) of the grinding tool (1) in the not yet pivoted state between the axes of rotation (B, C), so that both flanks (3, 4) are dressed simultaneously.

2. Method according to claim 1, **characterized in that** the disk-shaped dressing tool (5) is pivoted relatively to the grinding tool (1).

3. Method according to claim 1, **characterized in that** the grinding tool (1) is pivoted relatively to the disc-shaped dressing tool (5).

4. Method according to one of claims 1 till 3, **characterized in that** the grinding tool (1) is a single-thread or multiple-thread grinding worm for grinding of a gear by the method of generative grinding.

5. Method according to one of claims 1 till 4, **characterized in that** during dressing a substantially punctual contact exists between the flanks (3, 4) of the grinding tool (1) and the abrasive areas (6, 7) of the dressing tool (5).

6. Method according to claim 5, **characterized in that** the dressing is carried out by performing a plurality of dressing passes, in which the dressing tool (5) is moved relatively to the grinding tool (1) in axial direction (Y) with a respective constant radial infeed (X).

7. Method according to one of claims 1 till 6, **characterized in that** it is performed with a pre-profiled grinding worm for creating profile modifications on the flanks (3, 4) of the grinding worm (1).

8. Method according to one of claims 1 till 7, **characterized in that** also the root region and/or the tip region of the tooth-shaped profile (2) is dressed by pivoting of the dressing tool (5) around the axis (A), which is perpendicular on the axis of rotation (C) of the grinding tool (1).

9. Method according to one of claims 1 till 7, **characterized in that** the tip region of the tooth-shaped profile (2) is dressed by using a dressing bar.

10. Grinding machine for performing the method according to one of claims 1 till 9, which has a grinding tool (1) being a grinding worm, which is arranged on a grinding spindle which is rotating around an axis of rotation (C), which has a disk-shaped dressing tool (5), which is arranged on a dressing spindle which is rotating around an axis of rotation (B), wherein linear guides are arranged for moving the dressing tool (5) relatively to the grinding worm (1) in an axial direction (Y) and for adjusting the dressing tool (5) in radial direction (X) to a distance of the axes,
**characterized in that**
pivoting means are arranged which are driven by means of an electric motor for pivoting the dressing tool (5) and/or the grinding worm (1) around an axis (A) being perpendicular to an axis or rotation (C) of the grinding worm (1), wherein the axis (A) lies in a plane which is spanned by the axis of rotation (B) of the disc-shaped dressing tool (5) and the axis of rotation (C) of the grinding tool (1) in the not yet pivoted state between the axes of rotation (B, C) and wherein the pivoting angle is adjusted by a machine control (8) at least dependent from the radial infeed (X) of the dressing tool (5) relatively to the grinding worm (1).

## Revendications

1. Procédé pour profiler un outil de meulage (1), qui présente en coupe axiale au moins un profil denté (2), dans lequel le profil denté (2) présente un premier flanc (3) et un deuxième flanc (4) opposé au premier flanc (3), qui forment le bord du profil denté (2), dans lequel on guide, lors du profilage de l'outil de meulage (2), un outil de rectification en forme de disque (5) avec une première face abrasive (6) et une deuxième face abrasive (7) en présence d'une vitesse relative entre les faces abrasives (6, 7) et le profil denté (2), par rapport à l'outil de meulage (1), de telle manière qu'il en résulte une forme désirée des flancs (3, 4), dans lequel la première face abrasive (6) est associée au premier flanc (3) et la deuxième face abrasive (7) est associée au deuxième flanc (4), **caractérisé en ce que** l'on guide l'outil de rectification en forme de disque (5), tournant autour d'un axe de rotation (B), au moins sur une partie de la hauteur (X) du profil denté (2), de telle manière que simultanément la première face abrasive (6) touche le premier flanc (3) et la deuxième face abrasive (7) touche le deuxième flanc (4), ce pourquoi on fait pivoter l'outil de rectification en forme de disque (5) et/ou l'outil de meulage (1) l'un par rapport à l'autre autour d'un axe (A) orienté perpendiculairement à l'axe de rotation (C) de l'outil de meulage (1), dans lequel l'axe (A) se situe dans un plan, qui passe par l'axe de rotation (B) de l'outil de rectification en forme de disque (5) et par l'axe de rotation (C) de l'outil de meulage (1) dans l'état n'ayant pas encore pivoté entre les axes de rotation (B, C), de telle manière que les deux flancs (3, 4) soient rectifiés simultanément.

2. Procédé selon la revendication 1, **caractérisé en ce que** l'on fait pivoter l'outil de rectification en forme de disque (5) par rapport à l'outil de meulage (1).

3. Procédé selon la revendication 1, **caractérisé en ce que** l'on fait pivoter l'outil de meulage (1) par rapport à l'outil de rectification en forme de disque (5).

4. Procédé selon l'une quelconque des revendications 1 à 3, **caractérisé en ce que** l'outil de meulage (1) est une meule hélicoïdale à une ou plusieurs entrée(s) pour la rectification d'une roue dentée par le procédé de rectification en développante.

5. Procédé selon l'une quelconque des revendications 1 à 4, **caractérisé en ce qu'**il existe lors de la rectification un contact essentiellement ponctuel entre les flancs (3, 4) de l'outil de meulage (1) et les faces abrasives (6, 7) de l'outil de rectification (5).

6. Procédé selon la revendication 5, **caractérisé en ce que** l'on effectue la rectification en exécutant un certain nombre de courses de rectification, pendant lesquelles on déplace l'outil de rectification (5) par rapport à l'outil de meulage (1) en direction axiale (Y) chaque fois avec une approche radiale constante (X).

7. Procédé selon l'une quelconque des revendications 1 à 6, **caractérisé en ce qu'**on l'exécute sur une meule hélicoïdale déjà pré-profilée, afin d'apporter des modifications de profil aux flancs (3, 4) de la meule hélicoïdale (1).

8. Procédé selon l'une quelconque des revendications 1 à 7, **caractérisé en ce que** l'on effectue également la zone de pied et/ou la zone de tête du profil denté (2) avec le pivotement de l'outil de rectification (5) autour de l'axe (A) orienté perpendiculairement à l'axe de rotation (C) de l'outil de meulage (1).

9. Procédé selon l'une quelconque des revendications 1 à 7, **caractérisé en ce que** l'on rectifie la zone de tête du profil denté (2) au moyen d'une règle de dressage.

10. Meuleuse pour la mise en oeuvre du procédé selon l'une quelconque des revendications 1 à 9, qui présente un outil de meulage (1) réalisé en forme de meule hélicoïdale qui est disposé sur une broche de meulage tournant autour d'un axe de rotation (C), qui présente un outil de rectification en forme de disque (5) qui est disposé sur une broche de rectification tournant autour d'un axe de rotation (B), dans laquelle sont disposés des guides linéaires pour déplacer l'outil de rectification (5) par rapport à la meule hélicoïdale (1) dans la direction axiale (Y) et l'approcher en direction radiale (X) sur une distance axiale, **caractérisée en ce qu'**il se trouve des moyens de pivotement entraînés par un moteur électrique, afin de faire pivoter l'outil de rectification (5) et/ou la meule hélicoïdale (1) autour d'un axe (A) orienté perpendiculairement à l'axe de rotation (C) de la meule hélicoïdale (1), dans laquelle l'axe (A) est situé dans un plan, qui passe par l'axe de rotation (B) de l'outil de rectification en forme de disque (5) et par l'axe de rotation (C) de l'outil de meulage (1) dans l'état n'ayant pas encore pivoté entre les axes de rotation (B, C) et dans laquelle on règle l'angle de pivotement au moyen d'une commande de machine (8) au moins en fonction de l'approche radiale (X) de l'outil de rectification (5) par rapport à la meule hélicoïdale (1).
